# EUROPÄISCHE PATENTSCHRIFT

(11) **EP 2 705 101 B1**
(45) Veröffentlichungstag und Bekanntmachung des Hinweises auf die Patenterteilung: **11.09.2019**
(21) Anmeldenummer: 12718679.9
(22) Anmeldetag: 04.05.2012
(51) Int. Cl.: C09J 7/10, C09J 5/02, B32B 27/08, B32B 27/16, B32B 27/30, B32B 27/32, B32B 27/40, C08G 18/48, C08G 18/66, C08G 18/22, C08G 18/75, C08J 5/12, C09J 123/16, C09J 175/08

(54) **DOPPELSEITIGES KLEBEBAND MIT EINER ERSTEN ÄUSSEREN HAFTKLEBRIGEN UND EINER ZWEITEN ÄUSSEREN HITZEAKTIVIERBAREN SEITE**
DOUBLE-SIDED ADHESIVE TAPE COMPRISING A FIRST OUTER, PRESSURE-SENSITIVE ADHESIVE SIDE, AND A SECOND OUTER SIDE WHICH CAN BE THERMALLY-ACTIVATED
RUBAN ADHÉSIF DOUBLE FACE COMPORTANT UNE PREMIÈRE FACE EXTERNE AUTOADHÉSIVE ET UNE DEUXIÈME FACE EXTERNE THERMOACTIVABLE

(30) Priorität: 06.05.2011 DE 102011075468; 06.05.2011 DE 102011075470
(43) Veröffentlichungstag der Anmeldung: 12.03.2014
(73) Patentinhaber: tesa SE, 22848 Norderstedt (DE)
(72) Erfinder: SCHÜMANN, Uwe, 25421 Pinneberg (DE); WEILAND, Kirstin, 21035 Hamburg (DE); NEUHAUS-STEINMETZ, Hermann, 22926 Ahrensburg (DE); PERLBACH, Dennis, 21629 Neu Wulmstorf (DE); KOOPS, Arne, 23881 Neu-Lankau (DE); SCHUBERT, Thomas, 22850 Norderstedt (DE); KIRPICENOK, Olga, 25474 Ellerbek (DE); REICH, Sarah, 21259 Otter (DE)
(86) Internationale Anmeldenummer: PCT/EP2012/058285
(87) Internationale Veröffentlichungsnummer: WO 2012/152713

(56) Entgegenhaltungen:
- EP-A1- 1 262 532
- EP-A2- 1 217 053
- JP-A- 2009 086 452
- Anonymus: "Evaluation and interpretation of peak temperatures of DSC curves. Part 1: Basic principles Introduction", Thermal Analysis Application No. UC 232, 1 January 2010 (2010-01-01), pages 1-5, XP055389493, Retrieved from the Internet: URL:http://www.mt.com/dam/Analytical/Match arApps/uc232.pdf [retrieved on 2017-07-10]

## Beschreibung

Die vorliegende Erfindung betrifft ein doppelseitiges Klebeband mit einer haftklebrigen und einer hitzeaktivierbaren Seite.

Für industrielle Haftklebeband-Anwendungen werden sehr häufig doppelseitige Klebebänder eingesetzt, um zwei Materialien miteinander zu verkleben. Die Anforderungen sind für die unterschiedlichsten Einsatzrichtungen zum Teil sehr spezifisch, so dass hohe Anforderungen an die entsprechenden Klebebänder gestellt werden. Im Automobilbereich werden zum Beispiel sehr häufig eine hohe Temperaturstabilität sowie eine hohe Beständigkeit gegen Lösemittel und Kraftfahrstoffe gefordert. Diese Eigenschaften werden in sehr guter Form durch vernetzte Acrylathaftklebstoffe erfüllt.

Weiterhin können ebenfalls im Industriebereich die unterschiedlichsten Untergründe verklebt werden. Hier kann es zum Teil von Vorteil sein, hitzeaktivierbare Klebmassen einzusetzen, die ab einer bestimmten Temperatur erweichen, sehr gut auf die Substrate auffließen und dann beim Abkühlen einen festen Verbund ergeben.

In US 6,124,032 B1 wird zum Beispiel ein hitzeaktivierbares Klebeband zum Verschluss von Kartonagen beschrieben. Die Anforderungen sind in diesem Bereich aber sehr gering, da die Kräfte, die auf das Klebeband durch den Karton wirken, relativ gering sind. Dies äußert sich auch in dem Trägermaterial, welches aus Papier besteht. Der Fokus liegt somit nicht auf Verbundfestigkeit sondern auf ein Herstellverfahren für ein preisgünstiges Haftklebeband.

In US 5,593,759 A wird ein doppelseitiges Haftklebeband beschrieben, welches sich aus einer Trägerschicht zusammensetzt, die mit zwei dünnen Haftklebemassen beschichtet ist. Die Trägerschicht besteht aus einer Strukturklebemasse. Bei thermischer Aktivierung tritt eine Verblendung der Haftklebemasse mit dem Strukturhaftkleber auf und härtet diesen ebenfalls aus. Auf diesem Weg sind sehr feste Verbindungen zwischen zwei Fügeteilen möglich. Dennoch weist dieses Haftklebeband einen für viele Anwendungen elementaren Nachteil auf, da das doppelseitige Haftklebeband bereits zu Beginn auf beiden Seiten anfassklebrig ist. Es existieren eine Vielzahl von Anwendungen, bei denen es von Vorteil ist, wenn das Haftklebeband zumindest auf einer Seite nicht klebrig ist und somit optimal repositionierbar. In US 5,593,759 A ist dieser Vorteil nicht gegeben.

In US 4,248,748 A werden hitzeaktivierbare Polyacrylathaftklebemassen mit Harzzusätzen beschrieben. Durch die Harzzusätze wird die Glasübergangstemperatur der Polyacrylathaftklebemasse und somit der Tack bei Raumtemperatur hochgesetzt. Die hitzeaktivierbaren Haftklebemassen werden aber nur für einseitige Haftklebebänder (Folien-Verklebung etc.) eingesetzt. Es werden somit keine großen Anforderungen an die Verklebung von Fügeteilen oder an die Verankerung von hitzeaktivierbaren Haftklebemassen an die Folie gestellt.

In US 4,199,646 A werden hitzeaktivierbare Haftklebebänder beschrieben, wobei die hitzeaktivierbare Haftklebemasse einen Elastizitätsmodulus von 10 bis 300 kg/cm² aufweist. Der Modulus liegt somit bei der Aktivierungstemperatur auf dem Level von Haftklebemassen bei Raumtemperatur. Auch in diesem Patent wird - in Analogie zu US 4,248,748 A - die Klebkraft und die Elastizität über die Zusammensetzung der Haftklebemasse gesteuert. Weiterhin werden nur doppelseitige hitzeaktivierbare Haftklebebänder beschrieben, die nur beidseitig durch hitzeaktiviert werden können.

In EP 1 262 532 A1 wird ein doppelfunktionales Klebeband mit einer wärmeaktivierbaren Klebharzschicht aus Polyolefin und einem Acrylathaftklebstoff beschrieben, wobei zur Erzielung einer guten Verankerung der beiden Schichten aneinander die Polyolefinschicht N₂-coronabehandelt wird. In der Schrift werden nur durch Bestrahlung mit UV-Licht polymerisierte Acrylathaftklebstoffe beschrieben. Nachteilig daran ist die eingeschränkte Beschichtungsgeschwindigkeit, da die Polymerisation während des Beschichtungsprozesses stattfindet und somit Monomerumsatz und Polymerisationsgrad von der Beschichtungsgeschwindigkeit abhängig sind. Ein weiteres Problem können die relativ hohen Restmonomergehalte sein. Es stellte sich zudem heraus, dass die N₂-Coronabehandlung der Polyolefinschicht in Kombination mit anderen Haftklebstoffen als den beschriebenen UV-Polymerisaten nicht immer zu zufriedenstellenden Ergebnissen hinsichtlich der Verbundfestigkeit zwischen dem Haftklebstoff und dem Polyolefin führt.

Auch in EP 0 384 598 A1 wird ein doppelfunktionales Klebeband mit einer wärmeaktivierbaren Klebharzschicht aus Polyolefin und einem durch Bestrahlung mit UV-Licht polymerisierten Acrylathaftklebstoff beschrieben. Hier wird die Verankerung zur Polyolefinschicht durch ein propfpolymerisiertes Monomer erreicht. Nachteilig ist auch hier die eingeschränkte Beschichtungsgeschwindigkeit, da auch hier die durch UV-Licht ausgelöste Polymerisation während des Beschichtungsprozesses stattfindet und somit Monomerumssatz und Polymerisationsgrad nicht unabhängig von der Beschichtungsgeschwindigkeit sind und zudem auch noch die Pfropfungsreaktion während des Beschichtungsprozesses stattfindet und somit ebenfalls mit der Beschichtungsgeschwindigkeit in einer Wechselbeziehung steht.

In EP 1 308 492 A1 wird ein dreischichtiges Klebeband beschrieben, wobei die mittlere Schicht ein vernetztes Polyurethan-Trägermaterial und Außenschicht A eine hitzeaktivierbare Klebmasse ist. Nachteilig ist hier die nicht für alle Anwendungsbereiche uneingeschränkt gute Verankerung zwischen der hitzeaktivierbaren Außenschicht A und dem vernetzten Polyurethan-Trägermaterial, insbesondere nach Feuchtwärmebehandlungen.

Hitzeaktivierbare Klebebänder können zur Herstellung von Verbundgegenständen verwendet werden. In EP 1 262 532 A1 wird ein entsprechender Verbundgegenstand beschrieben. Die Nachteile ergeben sich aus den oben dargestellten Nachteilen des dort beschriebenen Klebebandes.

Aus EP 0 679 123 B1 ist ein Verbundprofil aus einem Klebeband und einem Dichtungsprofil bekannt. Dort wird zur Bildung des Verbundes eine Schaumstoff-Trägerschicht, die Teil eines Klebebandes ist, angeschmolzen. Nachteilig daran ist, dass der Schaum dadurch zumindest partiell seine Schaumstruktur verliert und das Klebeband somit seine charakteristischen klebtechnischen Eigenschaften einbüßt.

Aufgabe der Erfindung ist die Befriedigung des Bedarfes nach weiteren hitzeaktivierbaren Klebebändern, die die geschilderten Nachteile des Standes der Technik nicht oder nicht in dem Maße zeigen.

Das Klebeband soll zwei unterschiedliche Seiten haben. Eine Seite soll haftklebrig sein, die andere Seite soll hitzeaktivierbar sein. Mit hitzeaktivierbar ist gemeint, dass die Seite bei höheren Temperaturen erweichen oder schmelzen oder zumindest partiell schmelzen soll, um auf das zu verklebende Substrat auffließen, an das Substrat anschmelzen oder mit dem Substrat verschmelzen zu können. Die Verbundfestigkeit zwischen den Schichten des Klebebandes soll stets so gut sein, dass es beim Versagen des Klebebandes nie zu einer Delamination zwischen den einzelnen Schichten des Klebebandes kommt sondern stets zu einem Versagen innerhalb einer Schicht. Dies soll auch nach einer Feuchtwärmebehandlung des Klebebandes zutreffen. Es sollen auch sehr hohe Schichtdicken zugänglich sein und diese sollen auch in geschäumter oder schaumartiger Form realisierbar sein. Dicke schaumartige Schichten können sowohl die Klebkraft als auch die Scherfestigkeit eines Klebebandes stark erhöhen. Das Klebeband soll auch bei höheren Temperaturen, wie sie typischerweise im Innenraum eines Automobils auftreten können, zuverlässig halten. Das Klebeband soll aus wirtschaftlichen Gründen mit einer hohen Beschichtungsgeschwindigkeit herstellbar sein. Das Klebeband soll geeignet sein zur Herstellung von Verbundgegenständen und zur Verklebung von EPDM-Profilen und anderen gummiartigen Profilen, insbesondere Dichtungsprofilen im Automobilbereich.

Gelöst werden diese Aufgaben durch ein Klebeband, wie es gemäß Hauptanspruch dargestellt ist. Gegenstand der Unteransprüche sind dabei vorteilhafte Weiterbildungen des Klebebandes, Verfahren zur Herstellung desselben sowie Verwendungsmöglichkeiten.

Demgemäß betrifft die Erfindung ein doppelseitiges Klebeband mit einer ersten äußeren haftklebrigen und einer zweiten äußeren hitzeaktivierbaren Seite, umfassend einen zumindest zweischichtigen Produktaufbau aus den Schichten A und B,
- wobei Schicht A eine chemisch durch thermische Initiierung vernetzte Haftklebstoffschicht oder eine chemisch durch thermische Initiierung vernetzte haftklebrige Trägerschicht ist,
- wobei Schicht B eine Schicht auf Basis eines Polyolefins oder eines Polyolefin-Gemisches ist,
- wobei Schicht A und Schicht B direkt miteinander in Kontakt stehen und
- wobei die Oberfläche der Schicht A, die direkt mit Schicht B in Kontakt steht, plasmavorbehandelt worden ist,
- wobei die Plasmavorbehandlung in einer Atmosphäre aus Stickstoff, Kohlendioxid oder einem Edelgas oder einem Gemisch aus mindestens zwei dieser Gase erfolgt ist.

Überraschenderweise wurde gefunden, dass derartige doppelseitige Klebebänder mit einer haftklebrigen und einer hitzeaktivierbaren Seite in hervorragender Weise die Anforderungen erfüllen.

Schicht A ist eine chemisch durch thermische Initiierung vernetzte Haftklebstoffschicht oder eine chemisch durch thermische Initiierung vernetzte haftklebrige Trägerschicht. Unter einer Haftklebstoffschicht oder einer haftklebrigen Schicht wird in dieser Schrift wie im allgemeinen Sprachgebrauch eine Schicht verstanden, die - insbesondere bei Raumtemperatur - dauerhaft klebrig sowie klebfähig ist. Diese Schicht kann sowohl eine äußere, anfassbare Schicht eines Klebebandes sein, als auch eine mittlere Schicht und somit nur an den Außenkanten sichtbar und spürbar. Charakteristisch für eine solche Schicht ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie des Substrats reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffschichten oder haftklebrige Schichten haben besondere, charakteristische viskoelastische Eigenschaften, die zu der dauerhaften Klebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der zu betrachtenden Haftklebstoffschicht als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes und der daraus hergestellten Schicht. Beide Größen sind abhängig von der Deformationsfrequenz und der Temperatur.

Die Größen können mit Hilfe eines Rheometers ermittelt werden. Das zu untersuchende schichtförmige Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) * cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) * sin(δ) (τ = Schubspannung, γ = Deformation, δ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von 10° bis 10¹ rad/sec, G' zumindest zum Teil im Bereich von 10³ bis 107 Pa liegt und wenn G" ebenfalls zumindest zum Teil in diesem Bereich liegt. Stoffe dieser Art werden mitunter auch als viskoelastische Stoffe und die daraus hergestellten Schichten als viskoelastische Schichten bezeichnet. Die Begriffe haftklebrig und viskoelastisch werden in dieser Schrift als synonyme Begriffe betrachtet. Mit einer haftklebrigen Trägerschicht ist demzufolge in dieser Schrift eine viskoelastische Trägerschicht innerhalb der genannten Grenzen für G' und G" gemeint.

Eine chemisch vernetzte Haftklebstoffschicht oder eine chemisch vernetzte haftklebrige Trägerschicht liegt vor, wenn die Haftklebstoffschicht oder haftklebrige Trägerschicht durch eine chemische Umsetzung mit einem Vernetzer einen Zustand erreicht hat, der sie nicht mehr schmelzbar und nicht mehr in organischen Lösemitteln lösbar macht. Eine Verflüssigung ist dann nur noch durch Zersetzung möglich, die irreversibel ist. Als Vernetzer kommen alle mindestens difunktionellen Stoffe in Betracht, die mit den funktionellen Gruppen des Haftklebstoffes chemische Vernetzungsreaktionen eingehen können. Ihre Auswahl richtet sich nach den funktionellen Gruppen des Haftklebstoffes. Carboxylgruppen tragende Haftklebstoffe werden typischerweise mit Di- oder Polyepoxiden, eventuell unter zusätzlicher Katalyse, beispielsweise durch tertiäre Amine, oder mit Metallacetylacetonaten, Metallalkoxiden sowie Alkoxy-Metallacetylacetonaten vernetzt. Für die Vernetzung von Hydroxylgruppen tragenden Haftklebstoffen bieten sich beispielsweise Di- oder Polyisocyanate an.

Der Begriff "thermische Initiierung" bezieht sich darauf, dass der Vernetzer oder das Vernetzersystem, bestehend aus Vernetzer, Beschleuniger und/oder Initiator durch Temperatureinwirkung die chemische Vernetzungsreaktion eingeht oder initiiert und nicht durch Strahlungseinwirkung. Zu den thermisch initiierten Vernetzungen werden in dieser Schrift auch die Systeme gerechnet, bei denen die Aktivierungsenergie bereits bei Raumtemperatur oder darunter ohne zusätzliche Anwendung von Strahlung überwunden werden kann, die also bereits bei Raumtemperatur oder darunter ablaufen.

Die Vernetzungsreaktionen in dieser Erfindung werden also weder durch aktinische noch durch ionisierende Strahlung wie etwa UV-, Röntgen- noch Elektronenstrahlen initiiert. In einer bevorzugten Ausführungsform dieser Erfindung werden zusätzliche Vernetzungen, initiiert durch aktinische noch durch ionisierende Strahlung, ausgeschlossen, da sich überraschenderweise gezeigt hat, dass die Verbundfestigkeit zwischen den Schichten A und B des Klebebandes durch zusätzliche Bestrahlung mit aktinischer oder ionisierender Strahlung in Einzelfällen verschlechtert werden kann.

In einem bevorzugten Verfahren wird Schicht A in einem Hotmeltverfahren, insbesondere einem Extrusionsverfahren hergestellt. Dazu wird das haftklebrige Material, aus dem die chemisch durch thermische Initiierung vernetzte Haftklebstoffschicht oder die chemisch durch thermische Initiierung vernetzte haftklebrige Trägerschicht A hergestellt werden soll, im geschmolzenen Zustand in ein kontinuierlich arbeitendes Mischaggregat, vorzugsweise einen Extruder, eingebracht. In das kontinuierlich arbeitende Mischaggregat wird weiterhin das Vernetzersystem eingebracht, so dass die Vernetzungsreaktion gestartet wird. Es folgt das Austragen der zu diesem Zeitpunkt noch nicht vernetzten Schmelze aus dem Mischaggregat und die sofortige Beschichtung und Ausformung zu der Schicht A. Die gestartete Vernetzungsreaktion schreitet währenddessen voran, so dass Schicht A kurze Zeit später ihren vernetzten Zustand erreicht hat. Die Hauptvorteile dieses Verfahrens liegen darin, dass hohe Beschichtungsgeschwindigkeiten realisierbar sind und dass dickere Schichten herstellbar sind als mit einem lösemittelbasierten Verfahren. Überraschend lassen sich Schichten (A), die nach einem derartigen Verfahren hergestellt sind, erfindungsgemäß mit hoher Verbundfestigkeit an thermoplastische Schichten (B) anbinden.

In einer vorteilhaften Weiterbildung der Erfindung ist Schicht A geschäumt oder hat eine schaumartige Konsistenz. Der Schaum oder die schaumartige Konsistenz können durch das Eintragen oder durch die chemische Erzeugung eines oder mehrerer Gase in die Polymermatrix hergestellt worden sein oder durch die Verwendung von Mikrovollglaskugeln, Mikrohohlglaskugeln und/oder Mikrokunststoffkugeln aller Art. Auch Mischungen der genannten Stoffe können eingesetzt werden. Die Mikrokunststoffkugeln können vorexpandiert eingesetzt werden oder in einer expandierbaren Form.

Bei den Mikrokunststoffkugeln, auch Mikroballons genannt, handelt es sich um elastische Hohlkugeln, die eine thermoplastische Polymerhülle aufweisen; sie werden daher auch als expandierbare polymere Mikrosphären bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung - insbesondere durch Wärmezufuhr oder -erzeugung, beispielsweise durch Ultraschall oder Mikrowellenstrahlung -, erweicht einerseits die äußere Polymerhülle. Gleichzeitig geht das in der Hülle befindliche flüssige Treibgas in seinen gasförmigen Zustand über. Bei einer bestimmten Paarung von Druck und Temperatur - im Rahmen dieser Schrift als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 µm Durchmesser im unexpandierten Zustand) und ihre zur Expansion benötigten Starttemperatur (75 °C bis 220 °C) differenzieren.

Weiterhin sind unexpandierte Mikroballontypen auch als wässrige Dispersion mit einem Feststoff- beziehungsweise Mikroballonanteil von ca. 40 bis 45 Gew.-% erhältlich, weiterhin auch als polymergebundende Mikroballons (Masterbatche), zum Beispiel in Ethylvinylacetat mit einer Mikroballonkonzentration von ca. 65 Gew.-%. Weiterhin sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung entsprechend der vorteilhaften Weiterbildung der Erfindung geeignet.

Durch ihre flexible, thermoplastische Polymerschale besitzen die mit Mikroballons hergestellten Schäume eine höhere Spaltüberbrückungsfähigkeit als solche, die mit nicht expandierbaren, nicht polymeren Mikrohohlkugeln (wie Glas- oder Keramikhohlkugeln) gefüllt sind. Darum eignen sie sich besser zum Ausgleich von Fertigungstoleranzen, wie sie zum Beispiel bei Spritzgussteilen auftreten. Ferner kann ein solcher Schaum thermische Spannungen besser kompensieren.

So können beispielsweise durch die Auswahl des thermoplastischen Harzes der Polymerschale die mechanischen Eigenschaften des Schaums weiter beeinflusst werden. So ist es beispielsweise möglich, Schäume mit höherer Kohäsionsfestigkeit als mit der Polymermatrix allein herzustellen, obwohl der Schaum eine geringere Dichte als die Matrix aufweist. Weiterhin können typische Schaumeigenschaften wie die Anpassungsfähigkeit an raue Untergründe mit einer hohen Kohäsionsfestigkeit für PSA-Schäume kombiniert werden.

Bevorzugt werden der zu schäumenden Polymermasse bis zu 30 Gew.-% Mikroballons, insbesondere zwischen 0,5 Gew.-% und 10 Gew.-%, bezogen auf die Gesamtrezeptur der Polymermasse ohne Mikroballons, für die Schäumung zugesetzt.

In einer bevorzugten Ausführungsform ist Schicht A eine Schicht auf Basis eines bekannten, chemisch durch thermische Initiierung vernetzten Polyacrylat-Haftklebstoffes. Als Vernetzer für Polyacrylat-Haftklebstoffe eignen sich Di- oder Polyisocyanate, insbesondere dimerisierte oder trimerisierte Isocyanate, Di- oder Polyepoxidverbindungen, Epoxid-Amin-Vernetzersysteme, und zur koordinativen Vernetzung Metallacetylacetonate, Metallalkoxide sowie Alkoxy-Metallacetylacetonate jeweils bei Anwesenheit funktioneller Gruppen in den Polymer-Makromolekülen, die mit Isocyanatgruppen beziehungsweise Epoxidgruppen reagieren sowie mit den Metallverbindungen koordinative Verbindungen eingehen können.

Vorteilhafte Vernetzersysteme und geeignete Verfahren, um mit derartigen Vernetzern eine Verarbeitung der Polymermasse in der Schmelze zu erlauben, sind beispielweise in den Schriften EP 0 752 435 A, EP 1 802 722 A, EP 1 791 921 A, EP 1 791 922 A, EP 1 978 069 A, DE 10 2008 059 050 A beschrieben. Dabei wird der Vernetzer oder bei Vernetzersystemen zumindest ein Bestandteil des Vernetzersystems (zum Beispiel entweder der Vernetzer oder der Beschleuniger) erst spät in die Schmelze gegeben und sofort sehr homogen eingemischt (durch eine effiziente Vermischung, beispielweise im Extruder), um die Verweildauer des reaktiven Systems in der Polymerschmelze sehr kurz und daher die Verarbeitungszeit ("Topfzeit") möglichst lang zu gestalten. Der wesentliche Teil der Vernetzungsreaktion findet dabei erst nach der Ausformung des Polymers, insbesondere nach dessen Ausformung zur Schicht, statt, und zwar bevorzugt bei Raumtemperatur. Durch diese Vorgehensweise lassen sich zwei Verfahrensaspekte zueinander optimieren, nämlich zum einen eine möglichst wenig ablaufende Vernetzungsreaktion vor der Ausformung, um ungewollte und unkontrollierte Vorvernetzung und die entsprechende Vergelung (Bildung von höhervernetzten Bereichen - zum Beispiel Stippen - innerhalb der Polymerschmelze) weitgehend zu vermeiden, andererseits aber eine möglichst hohe Vermischungseffizienz des Vernetzers beziehungsweise der Vernetzersystemkomponenten in der relativ kurzen Verweilzeit in der Polymerschmelze
vor der Beschichtung, um tatsächlich ein sehr homogen vernetztes Endprodukt zu garantieren.

Als besonders bevorzugt hat sich insbesondere für die Vernetzung von Polyacrylat-Haftklebstoffen mit funktionellen Gruppen, die geeignet sind, mit Epoxidgruppen Verknüpfungsreaktionen einzugehen, ein Vernetzer-Beschleuniger-System herausgestellt, umfassend zumindest eine epoxidgruppenhaltige Substanz als Vernetzer und zumindest eine bei einer Temperatur unterhalb der Schmelztemperatur des Polyacrylats für die Verknüpfungsreaktion beschleunigend wirkende Substanz als Beschleuniger. Als epoxidgruppenhaltige Substanzen eigenen sich beispielweise multifunktionelle Epoxide, insbesondere bifunktionelle oder trifunktionelle (also solche Epoxide mit zwei beziehungsweise drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielweise primäre und/oder sekundäre Amine; insbesondere werden tertiäre und/oder multifunktionelle Amine eingesetzt. Einsetzbar sind auch solche Amine, die mehrere Amingruppen aufweisen, wobei diese Amingruppen primäre und/oder sekundäre und/oder tertiäre Amingruppen sein können, insbesondere Diamine, Triamine und/oder Tetramine. Insbesondere werden solche Amine gewählt, die mit den Polymerbausteinen keine oder nur geringfügige Reaktionen eingehen. Als Beschleuniger können weiterhin beispielweise solche auf Phosphatbasis, wie Phosphine und/oder Phosphoniumverbindungen, eingesetzt werden.

Mittels dieses Verfahrens lassen sich insbesondere Polymere auf Basis von Acrylsäureestern und/oder Methacrylsäureestern sowohl schäumen als auch vernetzen, wobei vorteilhaft zumindest ein Teil der Acrylsäureester die funktionellen Gruppen enthält und/oder Comonomere vorhanden sind, die die funktionellen Gruppen aufweisen. Als funktionelle Gruppen des zu vernetzenden Polymers, insbesondere auf (Meth-)Acrylatbasis, eigenen sich besonders Säuregruppen (Carbonsäure-, Sulfonsäure- und/oder Phosphonsäuregruppen) und/oder Hydroxylgruppen und/oder Säureanhydridgruppen und/oder Epoxidgruppen und/oder Amingruppen, gewählt und insbesondere abgestimmt auf den jeweiligen Vernetzer. Es ist besonders vorteilhaft, wenn das Polymer einpolymerisierte Acrylsäure und/oder Methacrylsäure enthält.

In einer weiteren bevorzugten Ausführungsform ist Schicht A eine Schicht auf Basis eines bekannten, chemisch durch thermische Initiierung vernetzten Polyurethan-Haftklebstoffes. Entsprechend vernetzte Polyurethan-Haftklebstoffe sind beispielsweise in EP 1 469 024 A1, EP 1 469 055 B1, EP 1849811 B1 oder in EP 2 046 855 A1 beschrieben. Haftklebrige Polyurethan-Hotmelt Prepolymere, die in einem Extrusionsverfahren verarbeitet und vernetzt werden können, sind in EP 2 276 784 A1 beschrieben. Als Vernetzer für Polyurethan-Haftklebstoffe eignen sich vor allem Di- oder Polyisocyanate, insbesondere diemerisierte oder trimerisierte Isocyanate. Eine besonderes Vernetzungssystem wird in EP 2 325 220 A1 beschrieben. Ein Verfahren zur Herstellung eines chemisch vernetzten Polyurethanfilms wird in EP 2 119 735 A1 beschrieben.

Sowohl die vorteilhaften Polyacrylat-Haftklebstoffe als auch die vorteilhaften Polyurethan-Haftklebstoffe können weitere Rezeptierungsbestandteile wie zum Beispiel Füllstoffe, Harze, insbesondere klebrig machende Harze, Weichmacher, Flammschutzmittel, Alterungsschutzmittel (Antioxidantien), Lichtschutzmittel, UV-Absorber, rheologische Additive, sowie sonstige Hilfs- und Zusatzstoffe enthalten.

Die äußere Oberfläche der Schicht B, die identisch ist mit der zweiten äußeren Seite des Klebebandes, ist hitzeaktivierbar. Mit hitzeaktivierbar ist gemeint, dass diese äußere Oberfläche bei höheren Temperaturen erweicht oder schmilzt oder zumindest partiell erweicht oder schmilzt, um auf das zu verklebende Substrat auffließen, an das Substrat anschmelzen oder mit dem Substrat verschmelzen zu können.

Schicht B ist eine Schicht auf Basis eines Polyolefins oder eines Polyolefin-Gemisches und somit eine thermisch verformbare, schmelzbare und schweißbare Schicht, wobei die Vorgänge des Verformens, Schmelzens und Schweißens reversibel und wiederholbar sind.

Insbesondere zur Verklebung von EPDM- und anderen Gummiprofilen werdenPolyolefine oder Polyolefin-Copolymere oder Gemische aus den genannten Stoffen eingesetzt, insbesondere Polypropylen-Copolymere. Besonders bevorzugt sind Ethylen-Propylen-Copolymere oder Gemische aus Ethylen-Propylen-Copolymeren und anderen Polyolefinen.

Ein für die Herstellung eines Verbundes aus dem erfindungsgemäßen Klebeband und einem Profil aus EPDM oder einem anderen gummiartigen Material durch heißes Aufsiegeln der hitzeaktivierbaren Seite des Klebebandes auf das Profil besonders bevorzugtes Ethylen-Propylen-Copolymer hat eine per DSC ermittelte Schmelztemperatur zwischen einschließlich 140 °C und einschließlich 180 °C, bevorzugt zwischen einschließlich 150 °C und einschließlich 170 °C. Die Abkürzung DSC steht für die bekannte thermoanalytische Methode "Differential Scanning Calorimetry", DIN 53765.

Die Oberfläche der Schicht A, also der chemisch durch thermische Initiierung vernetzten Haftklebstoffschicht oder der chemisch durch thermische Initiierung vernetzten haftklebrigen Trägerschicht, die direkt mit Schicht B in Kontakt steht, ist vor der Herstellung dieses Kontaktes plasmavorbehandelt worden, wobei die Plasmavorbehandlung in einer Atmosphäre aus Stickstoff, Kohlendioxid oder einem Edelgas oder einem Gemisch aus mindestens zwei dieser Gase erfolgt ist.

Als Coronavorbehandlung wird eine durch hohe Wechselspannung zwischen zwei Elektroden erzeugte Oberflächenbehandlung mit filamentären Entladungen bezeichnet, wobei die diskreten Entladungskanäle auf die zu behandelnde Substratoberfläche treffen. Insbesondere wird meist unter dem Begriff "Corona" eine "dielektrische Barrierenentladung" (engl. dielectric barrier discharge, DBD) verstanden. Dabei besteht mindestens eine der Elektroden aus einem Dielektrikum, also einem Isolator, oder ist mit einem solchen beschichtet oder überzogen.

Die Coronavorbehandlung ist als Methode zur Oberflächenvorbehandlung bekannter Stand der Technik (siehe dazu auch Wagner et al., Vacuum, 71 (2003), 417-436) und wird vielfach industriell eingesetzt. Ohne weitere Qualifizierung ist als Prozessgas Umgebungsluft anzunehmen, was in dieser Erfindung aber nicht der Fall ist. Die Verwendung anderer Prozessgase als Luft, wie zum Beispiel Stickstoff, Kohlendioxid oder Edelgase ist ebenfalls als Stand der Technik bekannt.

Das Substrat wird im Entladungsraum zwischen einer Elektrode und einer Gegenelektrode platziert oder hindurchgeführt, was als direkte physikalische Behandlung definiert ist. Bahnförmigen Substrate werden dabei typischerweise zwischen einer Elektrode und einer geerdeten Walze durchgeführt.

Durch eine geeignet hohe Bahnspannung wird das Substrat auf die als Walze ausgeführte Gegenelektrode gepresst, um Lufteinschlüsse zu verhindern. Der Behandlungsabstand ist typischerweise ca. 1 bis 2 mm. Ein grundsätzlicher Nachteil einer solchen Zwei-Elektroden-Geometrie mit einer Behandlung im Raum zwischen Elektrode und Gegenelektrode ist die mögliche Rückseitenbehandlung. Bei kleinsten Luft- oder Gaseinschlüssen auf der Rückseite, beispielsweise wenn die Bahnspannung bei einer Rolle-zu-Rolle-Behandlung zu gering ist, findet eine meist ungewünschte Corona-Behandlung der Rückseite statt.

Obwohl im weiteren Sinn eine Corona-Behandlung in Luft eine Technik ist, in der Plasma eine Rolle spielt, wird unter einer Plasmabehandlung bei Atmosphärendruck üblicherweise eine engere Definition verstanden.

Wenn eine Corona-Behandlung statt in Luft in einer anderen Gasmischung, zum Beispiel auf Stickstoffbasis, stattfindet, wird zwar teilweise schon von Plasma gesprochen. Eine Plasmabehandlung bei Atmosphärendruck im engeren Sinn ist jedoch eine homogene und entladungsfreie Behandlung. Beispielsweise kann durch Einsatz von Edelgasen, teils mit Beimischungen, ein solch homogenes Plasma erzeugt werden. Dabei findet die Behandlung in einem flächigen homogen mit Plasma gefüllten Reaktionsraum statt.

Das reaktive Plasma enthält Radikale und freie Elektronen, welche schnell mit vielen chemischen Gruppen in der Substratoberfläche reagieren können. Dies führt zur Entstehung von gasförmigen Reaktionsprodukten und hoch reaktiven, freien Radikalen in der Oberfläche. Diese freien Radikale können durch Sekundärreaktionen mit anderen Gasen rasch weiterreagieren und bilden verschiedene chemische Funktionsgruppen auf der Substratoberfläche. Wie bei allen Plasmatechniken steht die Erzeugung von funktionellen Gruppen im Wettbewerb mit dem Materialabbau.

Das zu behandelnde Substrat kann statt dem Reaktionsraum einer Zwei-Elektroden-Geometrie auch nur dem entladungsfreien Plasma ausgesetzt werden ("indirektes" Plasma). Das Plasma ist dann meist auch in guter Näherung potentialfrei. Das Plasma wird dabei meist durch einen Gasstrom von der Entladungszone fortgetrieben und nach kurzer Strecke auf das Substrat geleitet. Die Lebenszeit (und damit auch die nutzbare Strecke) des reaktiven Plasmas, oft "afterglow" genannt, wird durch die genauen Details der Rekombinationsreaktionen und der Plasmachemie bestimmt. Meist wird ein exponentielles Abklingen der Reaktivität mit dem Abstand von der Entladungsquelle beobachtet.

Moderne indirekte Plasmatechniken basieren oft auf einem Düsenprinzip. Hierbei kann die Düse rund oder linienförmig ausgeführt sein, teilweise wird mit Rotationsdüsen gearbeitet, ohne hier eine Einschränkung vornehmen zu wollen. Ein solches Düsenprinzip ist vorteilhaft aufgrund seiner Flexibilität und seiner inhärent einseitigen Behandlung. Solche Düsen, beispielsweise der Firma Plasmatreat GmbH (Deutschland), sind industriell weit verbreitet zur Vorbehandlung von Untergründen vor einer Verklebung. Nachteilig sind die indirekte und weniger effiziente da entladungsfreie Behandlung, und dadurch die reduzierten Bahngeschwindigkeiten. Die übliche Bauform einer Runddüse ist jedoch besonders gut geeignet schmale Warenbahnen zu behandeln, wie beispielsweise ein Klebeband mit einer Breite von wenigen cm.

Es sind verschiedene Plasmaerzeuger auf dem Markt, die sich in der Technik zur Plasmaerzeugung, der Düsengeometrie und der Gasatmosphäre unterscheiden. Obwohl sich die Behandlungen unter anderem in der Effizienz unterscheiden, sind die grundsätzlichen Effekte meist ähnlich und sind vor allem durch die eingesetzte Gasatmosphäre bestimmt. Eine Plasma-Behandlung kann in verschiedenen Atmosphären stattfinden, wobei als geeignete Atmosphäre in dieser Erfindung Stickstoff, Kohlendioxid oder ein Edelgas oder ein Gemisch aus mindestens zwei dieser Gase gefunden wurde.

Grundsätzlich kann man der Atmosphäre auch beschichtende oder polymerisierende Bestandteile beimischen, als Gas (zum Beispiel Ethylen) oder Flüssigkeiten (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Da die Effekte einer Plasmabehandlung chemischer Natur sind und eine Veränderung der Oberflächenchemie im Vordergrund steht, kann man die oben beschriebenen Methoden auch als chemisch-physikalische Behandlungsmethoden beschreiben. Obwohl sich Unterschiede im Detail ergeben können, ist im Sinne dieser Erfindung keine besondere Technik hervorzuheben, weder von der Art der Plasmaerzeugung noch der Bauart.

Als Plasmavorbehandlung ist in dieser Schrift eine Atmosphärendruckplasmavorbehandlung gemeint. Als Atmosphärendruckplasma ist in dieser Schrift ein elektrisch aktiviertes, homogenes, reaktives Gas definiert, welches sich nicht im thermischen Equilibrium befindet, mit einem Druck nahe dem Umgebungsdruck. Durch die elektrischen Entladungen und durch lonisierungsprozesse im elektrischen Feld wird das Gas aktiviert und hochangeregte Zustände in den Gasbestandteilen erzeugt. Das verwendete Gas oder die Gasmischung wird als Prozessgas bezeichnet. Grundsätzlich kann man der Plasmaatmosphäre auch beschichtende oder polymerisierende Bestandteile als Gas oder Aerosol beimischen.

Der Begriff "homogen" deutet darauf hin, dass keine diskreten, inhomogenen Entladungskanäle auf die Oberfläche des zu behandelnden Substrats treffen (auch wenn diese im Erzeugungsraum vorhanden sein können).

Die Einschränkung "nicht im thermischen Equilibrium" bedeutet, dass die lonentemperatur sich von der Elektronentemperatur unterscheiden kann. Bei einem thermisch erzeugten Plasma wären diese im Gleichgewicht (siehe dazu auch zum Beispiel Akishev et al., Plasmas and Polymers, Vol. 7, No. 3, Sept. 2002).

Hinsichtlich der erfindungsgemäßen Atmosphäre aus Stickstoff, Kohlendioxid oder einem Edelgas oder einem Gemisch aus mindestens zwei dieser Gase ist dafür Sorge zu tragen, dass sich keine oder zumindest nur sehr geringe Anteile an Restsauerstoff in dieser Atmosphäre befinden. Anzustreben sind Sauerstoffanteile von maximal 1000 ppm, bevorzugt maximal 100 ppm, besonders bevorzugt maximal 10 ppm.

Die Behandlungsintensität einer Coronabehandlung wird als "Dosis" in [Wmin/m²] angegeben, mit der Dosis D=P/b*v, mit P=elektrischer Leistung [W], b=Elektrodenbreite [m], und v=Bahngeschwindigkeit [m/min].

Die Plasmavorbehandlung der Oberfläche der Schicht A, die mit Schicht B in Kontakt steht, erfolgt bevorzugt im bereits chemisch vernetzten Zustand der Schicht A, also zu einem Zeitpunkt, wenn die durch thermische Initiierung voranschreitende Vernetzungsreaktion bereits so weit fortgeschritten ist, dass Schicht A nicht mehr schmelzbar ist. Die Vernetzung muss zu diesem Zeitpunkt allerdings nicht vollständig abgeschlossen sein, sie kann es aber sein. Überraschenderweise Weise hat sich gezeigt, dass die Verankerung zwischen den Schichten A und B dann besonders gut und vielfältig beanspruchbar ist, wenn die Corona- oder Plasmavorbehandlung nach Erreichen des vernetzten Zustandes erfolgt ist.

Erfindungsgemäß stehen Schicht A und Schicht B direkt miteinander in Kontakt. Damit ist gemeint, dass zwischen der plasmavorbehandelten Oberfläche der Schicht A, die direkt mit Schicht B in Kontakt steht, keine zusätzlichen weiteren Stoffe oder Schichten angebracht werden oder sich dort befinden. Ein direkter Kontakt beinhaltet demgemäß, dass sich kein zusätzlicher Klebstoff, Haftklebstoff, haftvermittelnder oder sonstiger Stoff zwischen Schicht A und Schicht B befindet oder dort hineingebracht wird. Der direkte Kontakt zwischen Schicht A und Schicht B wird durch einen üblichen Kaschier- oder Laminiervorgang hergestellt, bevorzugt bei Raumtemperatur. Der Kaschier- oder Laminiervorgang erfolgt bevorzugt im direkten Anschluss an die Plasmavorbehandlung der Oberfläche der Schicht A, ohne dass Schicht A zuvor mit einem Trennliner abgedeckt wird und ohne dass Schicht A, falls sie bahnförmig vorliegt, mit einem Trennliner eingedeckt und aufgewickelt wird. Zwischen der Plasmavorbehandlung der Oberfläche der Schicht A und dem Kaschier- oder Laminiervorgang vergehen idealerweise nur wenige Sekunden.

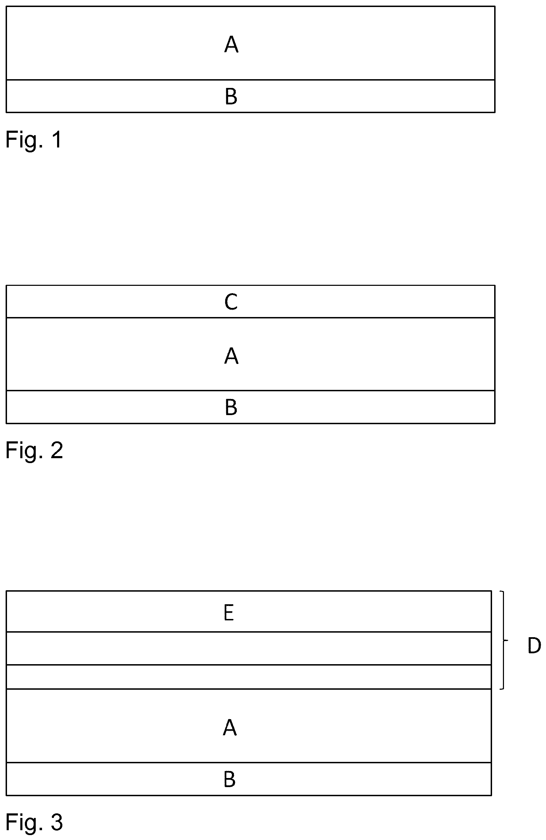

Die Oberfläche der Schicht A, die nicht direkt in Kontakt mit Schicht B steht, kann zur Erzielung einer optimierten Haftung auf schwer zu verklebenden Oberflächen, wie zum Beispiel auf niederenergetischen Oberflächen wie etwas Polyethylen oder Polypropylen oder auf bestimmten lackierten Oberflächen wie etwa bestimmten Clear Coat-Sorten, mit einer weiteren Schicht (Schicht C, Figur 2) oder mit einer weiteren Schichtenfolge (Schichtenfolge D, Figur 3) in direktem Kontakt stehen, wobei die äußere Schicht der Schichtenfolge eine Haftklebstoffschicht (Schicht E, Figur 3) ist, die dann für die spezielle Verwendung konzipiert ist. Eine Schichtenfolge (D) kann notwendig werden, um zum Beispiel eine optimale Verankerung zwischen der äußeren haftklebrigen Schicht (E) und der erfindungsgemäßen Schicht A zu erzielen, um Migrationsphänomene zu unterdrücken oder um eine möglichst ebene haftklebrige Oberfläche zu erzeugen. Einzelne Schichten in der Schichtenfolge können demgemäß beispielsweise haftvermittelnde Schichten, Sperrschichten oder Glättungsschichten sein. Die äußere haftklebrige Oberfläche des Klebebandes kann zur Erzielung einer optimierten Haftung auf schwer zu verklebenden Substraten ebenfalls corona- oder plasmabehandelt werden.

Das erfindungsgemäße doppelseitige Klebeband mit einer ersten äußeren haftklebrigen und einer zweiten äußeren hitzeaktivierbaren Seite, umfassend einen zumindest zweischichtigen Produktaufbau aus den Schichten A und B wie in Figur 1 dargestellt, wobei Schicht A eine chemisch durch thermische Initiierung vernetzte Haftklebstoffschicht oder eine chemisch durch thermische Initiierung vernetzte haftklebrige Trägerschicht ist, und Schicht B eine Schicht auf Basis eines Polyolefins oder eines Polyolefin-Gemisches ist, wobei Schicht A und Schicht B direkt miteinander in Kontakt stehen und wobei die Oberfläche der Schicht A, die direkt mit Schicht B in Kontakt steht, plasmavorbehandelt worden ist, dadurch gekennzeichnet, dass die Plasmavorbehandlung in einer Atmosphäre aus Stickstoff, Kohlendioxid oder einem Edelgas oder einem Gemisch aus mindestens zwei dieser Gase erfolgt ist, zeigt eine Kombination hervorragender Produkteigenschaften, die auch für den Fachmann derartig nicht vorherzusehen waren. So hat das Klebeband eine hohe innere Verbundfestigkeit, also eine hohe Verbundfestigkeit zwischen den Schichten A und B. Die Verbundfestigkeit ist so hoch, dass es bei zerstörenden Belastungen des Klebebandes, zum Beispiel bei Schälversuchen oder bei Scherversuchen, in der Regel nicht zu einem Spalten zwischen den Schichten A und B kommt. Stattdessen kommt es im Regelfall zu einem Materialbruch innerhalb der Schicht A oder - abhängig vom verklebten Substrat und dem verwendeten Haftklebstoff zu einem adhäsiven Versagen zwischen dem Klebeband und dem verklebten Substrat. Dies trifft auch zu, wenn das Klebeband bestimmungsgemäß heiß auf ein Substrat auflaminiert wurde, zum Beispiel bei Temperaturen von 150 °C bis 200 °C. Die Verbundfestigkeit zwischen den Schichten A und B wird dadurch nicht nachteilig beeinflusst. Auch nach Feuchtwärmebehandlungen, zum Beispiel nach einer zweiwöchigen Lagerung in einem Klima von 85 °C und 85 % relative Luftfeuchtigkeit, bleibt die hohe Verbundfestigkeit erhalten, ebenso nach einer zweiwöchigen Klimawechsellagerung mit den Zyklen 4 Stunden -40 °C, 4 Stunden Aufheizen / Abkühlen, 4 Stunden 80 °C/80 % relative Luftfeuchtigkeit. Weiterhin bleibt die Verbundfestigkeit auch dann erhalten, wenn die zerstörenden Prüfungen bei erhöhten Temperaturen durchgeführt werden, zum Beispiel bei 70 °C. Voraussetzung ist, dass die Prüftemperatur die Schmelztemperatur der Schicht B nicht überschreitet.

Das erfindungsgemäße doppelseitige Klebeband ist in einer Weise herstellbar, dass die Polymerisation des Haftklebstoffs oder der haftklebrigen Trägerschicht und deren Vernetzung entkoppelt von der Beschichtung stattfinden. Somit sind sehr wirtschaftliche Herstellprozesse mit hohen Beschichtungsgeschwindigkeiten darstellbar.

Weiterhin ist das erfindungsgemäße doppelseitige Klebeband vorteilhaft in sehr dicken Schichten sowie mit einer geschäumten Schicht herstellbar. Somit kann das Klebebband zum Beispiel spaltüberbrückende Dichtungsfunktionen oder Beiträge zur Geräuschdämpfung wahrnehmen.

Mit dem erfindungsgemäßen doppelseitigen Klebeband können sehr hohe Klebkräfte von 50 und mehr N/cm realisiert werden. Ebenso können sehr hohe Scherfestigkeiten erreicht werden. Dazu kann sehr vorteilhaft die Schäumung beitragen, ebenso die realisierbaren hohen Dicken.

Mit dem erfindungsgemäßen doppelseitigen Klebeband können Verbundgegenstände aus diesem Klebeband und einem Gegenstand aus einem thermoplastischen Kunststoff, aus EPDM oder aus einem anderen gummiartigen Material hergestellt werden.

Das erfindungsgemäße doppelseitige Klebeband ist geeignet zur Verklebung von Profilen aus EPDM oder einem anderen gummiartigen Material.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:

### Schälkraft

Die Schälkraft wurde in Anlehnung an PSTC-101 bestimmt. Die Bestimmung erfolgte bei einem Prüfklima von 23 °C +/- 1 °C Temperatur und 50 % +/- 5 % rel. Luftfeuchte. Es wurde ein Verbund aus dem erfindungsgemäßen Klebeband und einem Prüfsubstrat hergestellt, das abgestimmt auf den verwendeten thermoplastischen Kunststoff der Schicht B ausgewählt wurde. Die Prüfsubstrate wurden stets aus der gleichen Kunststoffart gewählt wie sie dem jeweils verwendeten thermoplastischen Kunststoff der Schicht B entsprachen. War also zum Beispiel der thermoplastische Kunststoff der Schicht B ein Polyurethan, wurde auch ein thermoplastisches Polyurethan-Prüfsubstrat gewählt. Im Falle der Polypropylen-Typen wurden zusätzlich noch handelsübliche EPDM-Profile unterschiedlicher Shore A-Härte von der Firma Meteor Gummiwerke als Prüfsubstrat verwendet.

Der Verbund wurde durch heißes Auflaminieren des erfindungsgemäßen Klebebandes mit seiner Schicht B auf das Prüfsubstrat hergestellt. Die notwendige Temperatur wurde mit einem Heißluftfön erzeugt und richtete sich nach dem verwendeten thermoplastischen Kunststoff der Schicht B.

Auf Schicht A wurde ein Aluminiumstreifen angebracht. Das erfindungsgemäße Klebeband wurde nahe am Substrat mit einem Skalpell eingeschnitten und sodann zusammen mit dem Aluminiumstreife in die Klemmbacken einer Zugprüfmaschine eingespannt. Das Zerreißen oder Abziehen erfolgte bei Verwendung gummiartiger Substrate in einer Geometrie, die von der Seite betrachtet einem liegenden "T" ähnelt. Bei Verwendung fester, steifer Substrate erfolgte das Abziehen in einem Winkel von 90°. Die Abzugsgeschwindigkeit betrug 300 mm/min.

Ziel war es, festzustellen, ob es zu einer Verbundschwäche zwischen den Schichten A und B kommt oder ob das Versagen innerhalb einer Schicht auftritt und wie hoch die Versagenskraft ist.

### Schertest

Der Schertest erfolgte in Anlehnung an Prüfvorschrift PSTC-107. Die Prüfmuster wurden so vorbereitet, dass jeweils zwei erfindungsgemäße Klebebandstreifen über ihre Schichten D miteinander durch Heißlamination mittels eines Heißluftföns verschweißt wurden, so dass ein beidseitig haftklebriges Klebebandmuster entstand. Dieses beidseitig haftklebrige Klebebandmuster wurden zwischen zwei Stahlplatten (rostfreier Stahl 302 nach ASTM A 666; 50 mm x 125mm x 1,1 mm, glänzende geglühte Oberfläche Oberflächenrauigkeit 50 ± 25 nm arithmetische Durchschnittsabweichung von der Basislinie) geklebt, viermal mit einem 2 kg-Gewicht angedrückt und anschließend dauerhaft einer konstanten Scherbelastung ausgesetzt, die so gewählt wurde, dass es nach längerer Zeit zum Versagen der Klebebandmuster kommt. Ermittelt wurde, ob es zu einer Verbundschwäche zwischen den Schichten A und B kommt oder ob das Versagen innerhalb einer Schicht auftritt und wie hoch die die Haltedauer in Minuten ist.

Die Verklebungsfläche betrug jeweils 13 x 20 mm². Die Scherbelastung dieser Verklebungsfläche betrug 2 kg. Die Messung erfolgte bei Raumtemperatur (23 °C) und in einigen Fällen auch bei 70 °C.

### Alterungsverhalten

Die Verbunde aus dem erfindungsgemäßen Klebeband und einem Substrat, wie sie für die Messung der Schälkraft hergestellt wurden, wurden Lagerungen bei ausgewählten klimatischen Bedingungen unterworfen, um das Alterungsverhalten zu ermitteln. Lagerung a): zweiwöchige Lagerung in einem Klima von 85 °C und 85% relative Luftfeuchtigkeit

Lagerung b): zweiwöchige Klimawechsellagerung mit den Zyklen 4 Stunden -40 °C, 4 Stunden Aufheizen / Abkühlen, 4 Stunden 80°C/80% relative Luftfeuchtigkeit.

Nach Ablauf der Lagerzeit wurden die Proben der Schälkraftprüfung unterzogen.

### Statische Glasübergangstemperatur

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist.

### Molekulargewichte

Die Bestimmung des mittleren Molekulargewichtes M_{W} beziehungsweise des mittleren Molekulargewichtes M_{N} und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 µm, 10³ Å (10⁻⁷ m), ID 8,0 mm x 50 mm verwendet. Zur Auftrennung wurden die Säulen PSS-SDV, 5 µm, 10³ Å (10⁻⁷ m), 10⁵ Å (10⁻⁵ m) und 10⁶ Å (10⁻⁴ m) mit jeweils ID 8,0 mm × 300 mm eingesetzt. Die Probenkonzentration betrug 4 g/l, die Durchflussmenge 1,0 ml pro Minute. Es wurde gegen PMMA-Standards gemessen.

Zur Herstellung Polyacrylat-Haftklebstoffe wurden die folgenden Rohstoffe verwendet:

| Chemische Verbindung | Handelsname | Hersteller | CAS-Nr. |
|---|---|---|---|
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2'-Azobis(2-methylbutyronitrile) | Vazo 67 | DuPont | 13472-08-7 |
| Pentaerythrittetraglycidether | Polypox R16 = | UPPC AG | 3126-63-4 |
| 3,4-Epoxycyclohexylmethyl-3,4-epoxycyclohexancarboxylat | Uvacure 1500 | Cytec Industries Inc. | 2386-87-0 |
| Triethylentetramin | Epikure 925 | Hexion Speciality Chemicals | 112-24-3 |
| Mikroballons (MB) (trocken-unexpandierte Mikrosphären, Durchmesser 9 bis 15 µm, Expansions-Starttemperatur 106 bis 111 °C, TMA-Dichte ≤ 25 kg/m³) | Expancel 051 DU 40 | Expancel Nobel Industries | |
| Terpenphenolharz (Erweichungspunkt 110 °C; M_{w} = 500 bis 800 g/mol; D = 1,50) | Dertophene T110 | DRT resins | 25359-84-6 |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Methylacrylat | | BASF | 96-33-3 |

Die Expansionsfähigkeit der Mikroballons kann durch die Bestimmung der TMA-Dichte [kg/m³] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur Tₘₐₓ unter Normaldruck, bevor die Mikroballons kollabieren.

Ein beispielhafter Polyacrylat-Haftklebstoff 1 (abgekürzte Bezeichnung in den Beispielen: AC 1) wurde wie folgt hergestellt: Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/Isopropanol (94:6) befüllt. Nach 45minütiger Durchleitung von Stickstoffgas unter Rühren wurde der Reaktor auf 58 °C hochgeheizt und 40 g Vazo 67, gelöst in 400 g Aceton, hinzugegeben. Anschließend wurde das äußere Heizbad auf 75 °C erwärmt und die Reaktion konstant bei dieser Außentemperatur durchgeführt. Nach 1 h wurden erneut 40 g Vazo 67, gelöst in 400 g Aceton, zugegeben und nach 4 h wurde mit 10 kg Aceton/Isopropanol-Gemisch (94:6) verdünnt.

Nach 5 sowie nach 7 h wurde jeweils mit 120 g Bis-(4-tert-butylcyclohexyl)-peroxydicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde in einem Aufkonzentrationsextruder bei Unterdruck vom Lösemittel befreit (Restlösemittelgehalt ≤ 0,3 Gew.-%). Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von T_{g} = - 35,6 °C.

Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun das geschmolzene Harz Dertophene T 110 zugegeben, so dass eine Konzentration des Harzes in der Schmelze von 28,3 Gew.-% entstand. Weiterhin wurde der Vernetzer Polypox R16 hinzugefügt. Seine Konzentration in der Schmelze betrug 0,14 Gew.-%. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Gew.-%. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 0,7 Gew.-%. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsfreie Abkühlung der Polymermasse erfolgte. Es entstand ein geschäumter Polyacrylat-Haftklebstoff, welcher anschließend mittels eines Walzenkalanders bahnförmig in einer Dicke von 0,8 mm ausgeformt und mit einer beidseitig silikonisierte Trennfolie (50 µm Polyester) eingedeckt wurde, währenddessen die chemische Vernetzungsreaktion voran schritt. Der aufgewickelte Film wurde mindestens zwei Wochen bei Raumtemperatur gelagert, bevor er weiter für die erfindungsgemäße Klebebandherstellung verwendet wurde.

Ein beispielhafter Polyacrylat-Haftklebstoff 2 (abgekürzte Bezeichnung in den Beispielen: AC2) wurde wie folgt hergestellt:
Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% des Vernetzers Uvacure® 1500 abgemischt, auf einen Feststoffgehalt von 30 % mit Aceton verdünnt und dann aus Lösung auf eine beidseitig silikonisierte Trennfolie (50 µm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Die Dicke betrug 50 µm. Der aufgewickelte Film wurde mindestens zwei Wochen bei Raumtemperatur gelagert, bevor er weiter für die erfindungsgemäße Klebebandherstellung verwendet wurde.

Die beispielhaft in ihrer Zusammensetzung und Herstellmethodik beschriebenen Polyacrylat-Haftklebstoffe sind in DE 10 2010 062 669 ausführlich beschrieben.

Zur Herstellung des Polyurethan-Haftklebstoffs wurden die folgenden Rohstoffe verwendet:

| Handelsname | Chemische Basis | mittlere zahlengemittelte Molmasse Mₙ (g/mol) | OHbeziehungsweise NCO-Zahl (mmol OH/kg beziehungsweise mmol NCO/kg | Hersteller / Lieferant |
|---|---|---|---|---|
| Voranol P 400 ® | Polypropylenglykol, Diol | 400 | 4643 | Dow |
| Voranol CP 6055 ® | Polypropylenglykol, Triol | 6000 | 491 | Dow |
| MPDiol ® | 2-Methyl-1,3-propandiol | 90,12 | 22193 | Lyondell |
| Vestanat IPDI ® | Isophorondiisocyanat (IPDI) | 222,3 | 8998 | Degussa |
| Desmodur W ® | Dicyclohexylmethandiisocyanat (HMDI) | 262 | 7571 | Bayer |
| Coscat 83 ® | Bismuttrisneodecanoat CAS-Nr. 34364-26-6 | | | Caschem |

Ein beispielhafter Polyurethan-Haftklebstoff (abgekürzte Bezeichnung in den Beispielen: PU 1) wurde wie folgt hergestellt:
Zunächst wurde ein haftklebriges hydroxyl-funktionalisiertes Polyurethan-Hotmelt-Prepolymer durch homogenes Mischen und somit chemisches Umsetzen der folgenden Ausgangsstoffe in den angegebenen Mengenverhältnissen hergestellt:

**Tabelle 2: Zusammensetzung des hydroxyl-funktionalisierten Polyurethan-Hotmelt-Prepolymers, Beispiel 1**

| Ausgangsstoff | Gewichtsanteil (Gew.-%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P 400 | 21,7 | 42,0 | 43,4 | 22,5 |
| Voranol CP 6055 | 48,9 | 10,0 | 6,9 | 3,6 |
| MP Diol | 5,2 | 48,0 | 49,7 | 25,7 |
| Coscat 83 | 0,1 | | | |
| Vestanat IPDI | 24,1 | | | 48,2 |
| Summe | 100,0 | 100,0 | 100.0 | 100,0 |

| | | | | |
|---|---|---|---|---|
| *errechnet aus den Gewichtsanteilen und den OH-Zahlen beziehungsweise NCO-Zahlen der Ausgangsstoffe unter der stark idealisierten Annahme, dass das Voranol P400 exakt die Funktionalität 2 hat und das Voranol CP 6055 exakt die Funktionalität 3 hat. | | | | |

Zunächst wurden alle aufgeführten Ausgangsstoffe außer dem MP Diol und dem Vestanat IPDI bei einer Temperatur von 70 °C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis betrug 0,90. Der theoretische Gelpunkt errechnet sich zu 0,91. Das entstandene Prepolymer war bei Raumtemperatur fest und von der Konsistenz her gummiartig und haftklebrig (eigenklebrig). Die komplexe Viskosität η* betrug bei Raumtemperatur (23 °C) 18000 Pas und bei 70 °C 210 Pas.

Die gewichtsgemittelte mittlere Molmasse M_{W} betrug 120000 g/mol, die zahlengemittelte mittlere Molmasse M_{N} 17600 g/mol.

Das entstandene Prepolymer war schmelzbar.

Zur Herstellung einer chemisch durch thermische Initiierung vernetzten haftklebrigen Trägerschicht wurde das Prepolymer einem auf 80 °C vorgeheizten Doppelschneckenextruder kontinuierlich zugeführt. Der Vernetzer wurde gleichzeitig und an gleicher Stelle dem Doppelschneckenextruder kontinuierlich zudosiert. Als Vernetzer fand Desmodur W (Dicyclohexylmethandiisocyanat) Verwendung.

Es wurde ein Gesamt-NCO/OH-Verhältnis von 1,05 eingestellt.

Somit betrugen die Mischungsverhältnisse:
100 Gewichtsteile Prepolymer : 4,54 Gewichtsteile Desmodur W.

Es wurde kontinuierlich gemischt und gefördert. Die Zeit bis zum Austritt des Extrudats aus dem Extruder betrug ca. zwei Minuten.

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 0,8 mm. Der Film wurde nach Abkühlung auf Raumtemperatur aufgewickelt, nachdem zuvor eine der beiden silikonisierten Polyesterfolien entfernt wurde. Der aufgewickelte Film wurde mindestens zwei Wochen bei Raumtemperatur gelagert, bevor er weiter für die erfindungsgemäße Klebebandherstellung verwendet wurde. G' bei 1 rad /sec und 23 °C betrug 120000 Pa, G" bei 1 rad /sec und 23 °C betrug 90000 Pa, G' bei 10 rad /sec und 23 °C betrug 360000 Pa und G" bei 10 rad /sec und 23 °C betrug 200000 Pa.

Als thermoplastische Kunststoffe zur Herstellung von Schicht B fanden Verwendung:

| *Bezeichnung in den Beispielen* | *Handelsname* | *Hersteller* | *Herstellerbeschreibung* |
|---|---|---|---|
| TP1 | Polypropylen BA 110 CF | Borealis | Heterophasiges Polypropylen Copolymer ohne Slip- und Antiblock Additive, DSC-Schmelztemperatur: 158° bis 162 °C |
| TP2 | Polypropylen BHC 5012 | Borealis | Heterophasiges Polypropylen Copolymer ohne Slip- und Antiblock Additive, DSC-Schmelztemperatur: 158° bis 162 °C |
| TP3 | Desmomelt 530 | Bayer | Stark kristallisierendes, elastisches Polyurethan sehr geringer Thermoplastizität, Mindestaktiviertemperatur ca. 55 °C |
| TP4 | Epacol TK 42 | Epaflex | Thermoplastische Polyurethan hoher Kristallinität, Aktiviertemperatur: 55° bis 60 °C |
| TP5 | Platamid M 1276 T | Arkema | Hochmolekulares Copolyamid vom Nylontyp in Granulatform, Smp 110° bis 115 °C (DIN 53736, Verfahren A) |

Die Ausformungen zur Folie in einer jeweiligen Dicke von 50 µm erfolgten mittels eines üblichen Einschneckenextruders. Im Falle des Polypropylen-BA 110 CF wurde die daraus hergestellten Folien von der Firma Renolit AG, Salzgitter erworben. Diese Folie war seitens Renolit luftcoronavorbehandelt worden.

Die physikalischen Behandlungen der Schicht A wurden im Rolle-zu-Rolle-Verfahren mit einer Coronaanlage mit einem Corona-Plus Generator der Firma Vetaphone A/S (Dänemark) mit einer üblichen DBD-Konfiguration durchgeführt. Es wurden Einschubkassetten mit 0,6 m breiten Metallelektrodenmessern und eine geerdete mit Silikon überzogene Walze verwendet. Der Abstand der Elektroden zur Walze betrug 2,0 mm. Die Behandlungen fanden statt bei einer Bahngeschwindigkeit von 20 m/min. Die Elektrodengehäuse wurden mit dem jeweiligen Prozessgas geflutet, bei einem Gasfluß von 20 m³/h. Der Restsauerstoffgehalt in der Prozessgasatmosphäre betrug stets < 10 ppm Sauerstoff.

Alternativ könnte ohne Einschränkung auch eine andere kommerziell erhältliche Anlage zur Behandlung mit Prozessgas-Corona verwendet werden, beispielsweise eine Anlage mit der Bezeichnung Aldyne™ der SOFTAL Corona & Plasma GmbH (Deutschland). Alternativ könnten die entsprechenden physikalischen Vorbehandlungen der Schicht A zumindest in einer Stickstoffatmosphäre auch mit einem homogenen, indirekten Atmosphärendruckplasma durchgeführt werden. Dazu könnte eine Laboranlage FG5001 der Firma Plasmatreat GmbH (Steinhagen) mit einer Rotationsdüse RD1004 verwendet werden, bei einer Geschwindigkeit des Durchlaufs von Schicht A (Bahngeschwindigkeit) von 5m/min bei 10mm Abstand zur Oberfläche von Schicht A. Es konnten keine wesentlichen Unterschiede festgestellt werden.

Zur Herstellung erfindungsgemäßer doppelseitiger Klebebänder wurden die hergestellten vernetzten Haftklebstoffschichten und die thermoplastischen Kunststoffschichten in der folgenden Weise miteinander kombiniert und unmittelbar nach physikalischer Vorbehandlung der Haftklebstoffschichten unter Prozessgasatmosphäre durch Kaschieren bei Raumtemperatur miteinander in Kontakt gebracht.

**Beispiele (nicht erfindungsgemäß)**

| | Schicht A | Schicht B | Schicht C | Prozessgas | Corona-Dosis (W*min/m²) |
|---|---|---|---|---|---|
| Beispiel 1 | AC 1 | TP 1 | | Stickstoff | 35 |
| Beispiel 2 | AC 1 | TP 1 | | Stickstoff | 70 |
| Beispiel 3 | AC 1 | TP 1 | | Kohlendioxid | 35 |
| Beispiel 4 | AC 1 | TP 1 | | Kohlendioxid | 70 |
| Beispiel 5 | AC 1 | TP 1 | | Argon | 35 |
| Beispiel 6 | AC 1 | TP 1 | | Argon | 70 |
| Beispiel 7 | AC 1 | TP 2 | | Stickstoff | 35 |
| Beispiel 8 | AC 1 | TP 2 | | Stickstoff | 70 |
| Beispiel 9 | AC 1 | TP 3 | | Stickstoff | 35 |
| Beispiel 10 | AC 1 | TP 3 | | Stickstoff | 70 |
| Beispiel 11 | AC 1 | TP 4 | | Stickstoff | 35 |
| Beispiel 12 | AC 1 | TP 4 | | Stickstoff | 70 |
| Beispiel 13 | AC 1 | TP 5 | | Stickstoff | 35 |
| Beispiel 14 | AC 1 | TP 5 | | Stickstoff | 70 |
| Beispiel 15 | PU 1 | TP 1 | AC 2 | Stickstoff | 35 |
| Beispiel 16 | PU 1 | TP 1 | AC 2 | Stickstoff | 70 |
| Beispiel 17 | PU 1 | TP 1 | AC 2 | Kohlendioxid | 35 |
| Beispiel 18 | PU 1 | TP 1 | AC 2 | Kohlendioxid | 70 |
| | | | | | |
| Vergleichsbeispiel 1 | AC 1, unvernetzt | TP 1 | | Stickstoff | 70 |
| Vergleichsbeispiel 2 | AC 1 | TP 1 | | Luft | 70 |

### Prüfergebnisse:

Schälkraft: In der Schälkraftprüfung wurde in den Beispielen 1 bis 18 stets ein kohäsives Versagen innerhalb der Schicht A ermittelt. Im Beispiel 7 kam es an einzelnen Mustern zu einem überwiegend kohäsiven Versagen mit geringen (ca. 10 %) adhäsiven Versagensanteilen zwischen Schicht A und B. In den Beispielen 1 bis 14 betrug die Kraft, die zum kohäsiven Versagen der Schicht A führte, also die Spaltkraft, 25 bis 30 N/cm.

In den Beispielen 15 bis 18 betrug die Spaltkraft 38 bis 42 N/cm.

In den Vergleichsbeispielen 1 und 2 kam es zum adhäsiven Versagen zwischen den Schichten A und B.

Nach den Lagerungen a) und b) zur Ermittlung des Alterungsverhaltens kam es in den Beispielen 1 bis 18 ebenfalls stets zu einem kohäsiven Versagen innerhalb der Schicht A, wobei sich allerdings die Spaltkräfte um 20 % bis 30 % gegenüber den oben angegebenen Werten reduziert waren .

Schertest: In der Schertestprüfung wurde in den Beispielen 1 bis 18 stets ein kohäsives Versagen innerhalb der Schicht A ermittelt. In den Beispielen 1 bis 14 betrug die Haltezeit bei Raumtemperatur 100 bis 500 Minuten. In den Beispielen 15 bis 18 betrug die Haltezeit bei Raumtemperatur 2500 bis 10000 Minuten. Die Beispiele 15 bis 18 wurden auch bei 70 °C geprüft. Auch hier kam es zum kohäsiven Versagen innerhalb der Schicht A. Die Haltezeiten betrugen 200 bis 400 Minuten.

In den Vergleichsbeispielen 1 und 2 kam es zum adhäsiven Versagen zwischen den Schichten A und B.

## Patentansprüche

1. Doppelseitiges Klebeband mit einer ersten äußeren haftklebrigen und einer zweiten äußeren hitzeaktivierbaren Seite, umfassend einen zumindest zweischichtigen Produktaufbau aus den Schichten A und B,
wobei Schicht A eine chemisch durch thermische Initiierung vernetzte Haftklebstoffschicht oder eine chemisch durch thermische Initiierung vernetzte haftklebrige Trägerschicht ist,
wobei Schicht B eine Schicht auf Basis eines Polyolefins oder eines Polyolefin-Gemisches ist,
wobei Schicht A und Schicht B direkt miteinander in Kontakt stehen und
wobei die Oberfläche der Schicht A, die direkt mit Schicht B in Kontakt steht, plasmavorbehandelt worden ist,
**dadurch gekennzeichnet, dass**
die Plasmavorbehandlung in einer Atmosphäre aus Stickstoff, Kohlendioxid oder einem Edelgas oder einem Gemisch aus mindestens zwei dieser Gase erfolgt ist.

2. Doppelseitiges Klebeband gemäß Anspruch 1,
**dadurch gekennzeichnet, dass**
die Oberfläche der Schicht A, die mit Schicht B in Kontakt steht, im chemisch vernetzten Zustand plasmavorbehandelt worden ist.

3. Doppelseitiges Klebeband gemäß einem der vorangegangenen Ansprüche,
**dadurch gekennzeichnet, dass**
zur Vernetzung von Schicht A keine zusätzliche aktinische oder ionisierende Strahlung verwendet wird.

4. Doppelseitiges Klebeband gemäß einem der vorangegangenen Ansprüche,
**dadurch gekennzeichnet, dass**
Schicht A eine in einem Hotmeltverfahren, insbesondere einem Extrusionsverfahren hergestellte Schicht ist.

5. Doppelseitiges Klebeband gemäß einem der vorangegangenen Ansprüche,
**dadurch gekennzeichnet, dass**
Schicht A eine Schicht auf Basis von Polyacrylat ist.

6. Doppelseitiges Klebeband gemäß einem der Ansprüche 1 bis 4,
**dadurch gekennzeichnet, dass**
Schicht A eine Schicht auf Basis von Polyurethan ist.

7. Doppelseitiges Klebeband gemäß einem der vorangegangenen Ansprüche,
**dadurch gekennzeichnet, dass**
Schicht A geschäumt ist oder eine schaumartige Konsistenz hat.

8. Doppelseitiges Klebeband gemäß einem der vorangegangenen Ansprüche,
**dadurch gekennzeichnet, dass**
die Oberfläche der Schicht A, die nicht direkt in Kontakt mit Schicht B steht, mit einer weiteren Schicht oder mit einer weiteren Schichtenfolge in direktem Kontakt steht, wobei die äußere Schicht eine Haftklebstoffschicht ist.

9. Doppelseitiges Klebeband gemäß einem der vorangegangenen Ansprüche,
**dadurch gekennzeichnet, dass**
Schicht B eine Schicht auf Basis eines Polypropylen-Copolymers oder eines Gemisches aus einem Polypropylen-Copolymers und einem anderen Polyolefin ist.

10. Verfahren zur Herstellung eines doppelseitigen Klebebandes nach einem der vorangegangenen Ansprüche,
**dadurch gekennzeichnet, dass**
Schicht A und Schicht B in einem unmittelbar im Anschluss an die Plasmavorbehandlung stattfindenden Kaschier- oder Laminierprozess direkt miteinander in Kontakt gebracht werden.

11. Verwendung eines doppelseitigen Klebebandes gemäß einem der vorangegangenen Ansprüche zur Herstellung eines Verbundgegenstandes, umfassend ein Klebeband gemäß einem der vorangegangenen Ansprüche und einem Gegenstand aus einem thermoplastischen Kunststoff, aus EPDM oder aus einem anderen gummiartigen Material.

12. Verwendung eines doppelseitigen Klebebandes gemäß einem der vorangegangenen Ansprüche zur Verklebung von Profilen aus EPDM oder einem anderen gummiartigen Material

## Claims

1. Double-sided adhesive tape having a first outer pressure-sensitive adhesive side and a second outer heat-activatable side, comprising an at least two-layer product system composed of layers A and B,
layer A being a layer of pressure-sensitive adhesive crosslinked chemically by thermal initiation, or a pressure-sensitive adhesive carrier layer crosslinked chemically by thermal initiation,
layer B being a layer based on a polyolefin or a polyolefin mixture,
layer A and layer B being in direct contact with one another, and
the surface of layer A that is in direct contact with layer B having been plasma-pretreated,
**characterized in that**
the plasma pretreatment has taken place in an atmosphere of nitrogen, carbon dioxide, or a noble gas, or a mixture of at least two of these gases.

2. Double-sided adhesive tape according to Claim 1,
**characterized in that**
the surface of the layer A that is in contact with layer B has been corona- or plasma-pretreated in the chemically crosslinked state.

3. Double-sided adhesive tape according to either of the preceding claims,
**characterized in that**
no additional actinic or ionizing radiation is used for crosslinking layer A.

4. Double-sided adhesive tape according to any of the preceding claims,
**characterized in that**
layer A is a layer produced in a hotmelt process, more particularly an extrusion process.

5. Double-sided adhesive tape according to any of the preceding claims,
**characterized in that**
layer A is a layer based on polyacrylate.

6. Double-sided adhesive tape according to any of Claims 1 to 4,
**characterized in that**
layer A is a layer based on polyurethane.

7. Double-sided adhesive tape according to any of the preceding claims,
**characterized in that**
layer A is foamed or has a foamlike consistency.

8. Double-sided adhesive tape according to any of the preceding claims,
**characterized in that**
the surface of the layer A that is not in direct contact with layer B is in direct contact with a further layer or with a further layer sequence, the outer layer being a layer of pressure-sensitive adhesive.

9. Double-sided adhesive tape according to any of the preceding claims,
**characterized in that**
layer B is a layer based on a polypropylene copolymer or a mixture of a polypropylene copolymer and another polyolefin.

10. Method for producing a double-sided adhesive tape according to any of the preceding claims,
**characterized in that**
layer A and layer B are brought into direct contact with one another in a backing or laminating operation which takes place immediately following the corona or plasma pretreatment.

11. Use of a double-sided adhesive tape according to any of the preceding claims for producing a composite article comprising an adhesive tape according to any of the preceding claims and an article composed of a thermoplastic plastic, of EPDM, or of another rubberlike material.

12. Use of a double-sided adhesive tape according to any of the preceding claims for adhesively bonding profiles composed of EPDM or of another rubberlike material.

## Revendications

1. Bande adhésive double face comprenant un premier côté extérieur adhésif de contact et un deuxième côté extérieur activable thermiquement, comprenant une structure de produit au moins bicouche constituée par les couches A et B,
la couche A étant une couche adhésive de contact réticulée chimiquement par initiation thermique ou une couche support adhésive de contact réticulée chimiquement par initiation thermique,
la couche B étant une couche à base d'une polyoléfine ou d'un mélange de polyoléfines,
la couche A et la couche B étant directement en contact l'une avec l'autre, et
la surface de la couche A, qui est directement en contact avec la couche B, ayant été prétraitée par plasma,
**caractérisée en ce que**
le prétraitement par plasma a lieu dans une atmosphère constituée par de l'azote, du dioxyde de carbone ou un gaz noble ou un mélange d'au moins deux de ces gaz.

2. Bande adhésive double face selon la revendication 1, **caractérisée en ce que** la surface de la couche A, qui est en contact avec la couche B, a été prétraitée par plasma à l'état réticulé chimiquement.

3. Bande adhésive double face selon l'une quelconque des revendications précédentes, **caractérisée en ce qu'**aucun rayonnement actinique ou ionisant supplémentaire n'est utilisé pour la réticulation de la couche A.

4. Bande adhésive double face selon l'une quelconque des revendications précédentes, **caractérisée en ce que** la couche A est une couche fabriquée par un procédé de fusion à chaud, notamment un procédé d'extrusion.

5. Bande adhésive double face selon l'une quelconque des revendications précédentes, **caractérisée en ce que** la couche A est une couche à base de polyacrylate.

6. Bande adhésive double face selon l'une quelconque des revendications 1 à 4, **caractérisée en ce que** la couche A est une couche à base de polyuréthane.

7. Bande adhésive double face selon l'une quelconque des revendications précédentes, **caractérisée en ce que** la couche A est moussée ou présente une consistance mousseuse.

8. Bande adhésive double face selon l'une quelconque des revendications précédentes, **caractérisée en ce que** la surface de la couche A, qui n'est pas en contact direct avec la couche B, est en contact direct avec une autre couche ou avec une autre succession de couches, la couche extérieure étant une couche adhésive de contact.

9. Bande adhésive double face selon l'une quelconque des revendications précédentes, **caractérisée en ce que** la couche B est une couche à base d'un copolymère de polypropylène ou d'un mélange d'un copolymère de polypropylène et d'une autre polyoléfine.

10. Procédé de fabrication d'une bande adhésive double face selon l'une quelconque des revendications précédentes, **caractérisé en ce que** la couche A et la couche B sont mises en contact directement l'une avec l'autre dans un processus de contre-collage ou de stratification ayant lieu immédiatement après le prétraitement par plasma.

11. Utilisation d'une bande adhésive double face selon l'une quelconque des revendications précédentes pour la fabrication d'un article composite, comprenant une bande adhésive selon l'une quelconque des revendications précédentes et un article constitué par une matière plastique thermoplastique, de l'EPDM ou un autre matériau de type caoutchouc.

12. Utilisation d'une bande adhésive double face selon l'une quelconque des revendications précédentes pour le collage de profilés en EPDM ou un autre matériau de type caoutchouc.
